(19) Europäisches Patentamt
European Patent Office
Office européen des brevets

(11) **EP 1 277 076 B1**

(12) **EUROPÄISCHE PATENTSCHRIFT**

(45) Veröffentlichungstag und Bekanntmachung des Hinweises auf die Patenterteilung:
**02.04.2008 Patentblatt 2008/14**

(21) Anmeldenummer: **01940192.6**

(22) Anmeldetag: **25.04.2001**

(51) Int Cl.:
*G02C 7/02* *(2006.01)*

(86) Internationale Anmeldenummer:
**PCT/DE2001/001582**

(87) Internationale Veröffentlichungsnummer:
**WO 2001/081981 (01.11.2001 Gazette 2001/44)**

(54) **PROGRESSIVES BRILLENGLAS**

PROGRESSIVE SPECTACLE GLASS

VERRE DE LUNETTES PROGRESSIF

(84) Benannte Vertragsstaaten:
**AT BE CH CY DE DK ES FI FR GB GR IE IT LI LU MC NL PT SE TR**

(30) Priorität: **25.04.2000 DE 10020241**
**25.04.2000 DE 10020244**
**28.04.2000 DE 10021047**
**17.01.2001 WOPCT/DE01/00188**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **WELK, Andrea**
**81547 München (DE)**
• **BAUMBACH, Peter**
**81543 München (DE)**
• **HAIMERL, Walter**
**80337 München (DE)**
• **PFEIFFER, Herbert**
**81247 München (DE)**
• **AWRATH, Norbert**
**81539 München (DE)**
• **ESSER, Gregor**
**81735 München (DE)**
• **BROSIG, Jochen**
**82031 Grünwald (DE)**
• **MÜLLER, Werner**
**75443 Ötisheim (DE)**
• **WECHS, Martin**
**81373 München (DE)**
• **HASER, Stephan, Dr.**
**81829 München (DE)**
• **ALTHEIMER, Helmut**
**87650 Lauchdorf (DE)**
• **DORSCH, Rainer**
**81477 München (DE)**
• **NIKOLAUS, Winfried**
**85540 Haar (DE)**
• **ZIMMERMANN, Martin**
**85253 Kleinberghofen (DE)**

(74) Vertreter: **Müller-Boré & Partner**
**Patentanwälte**
**Grafinger Strasse 2**
**81671 München (DE)**

(56) Entgegenhaltungen:
**DE-A- 3 716 201** **US-A- 4 606 622**
**US-A- 5 488 442** **US-A- 5 719 675**
**US-A- 5 784 144**

**Beschreibung**

**Technisches Gebiet**

Die Erfindung bezieht sich auf ein Verfahren zum Herstellen eines Brillenglases.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch andere angeordnet sein und/oder für andere Entfernungen ausgelegt sein. Ferner ist es möglich, daß mehrere Nahteile und/ oder Fernteile und entsprechend Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Glasmaterials die für die augenoptische Charakterisierung einer Fläche häufig verwendeten Größen:

$$\text{Flächenbrechwert} = 0{,}5 * (n-1) * (1/R1 + 1/R2)$$

$$\text{Flächenastigmatismus} = (n-1) * (1/R1 - 1/R2)$$

Der Flächenbrechwert ist die Größe, über die die Zunahme der Wirkung vom Fernteil zum Nahteil erreicht wird. Der Flächenastigmatismus (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

**Stand der Technik**

Die zur Erzielung der Flächenbrechwert-Zuwachses erforderliche Änderung der Krümmung der Fläche ohne das Sehen "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht.

Aus flächentheoretischen Gründen ist es also nicht möglich, bei einer Fläche, deren Flächenbrechkraft vom Fernteil zum Nahteil zunimmt, die Bereiche seitlich einer (atigmatismusfreien oder mit einem vorgegebenen Astigmatmus behafteten) Linie frei von phsiologisch störendem Flächenastigmatismus "zu halten" (Satz von Minkwitz).

Da sich im Fernteil die Krümmung nicht ändern soll, ist es relativ einfach, den Fernteil der progressiven Fläche so zu gestalten, daß der Fernteil in einem großen Bereich einen sehr kleinen Flächenastigmatismus (< 0,5 dpt) oder sogar den Flächenastigmatismus-Wert "0" aufweist. Andererseits ist die "Qualität" der Gestaltung der seitlichen Bereiche des Übergangsbereichs von entscheidender Bedeutung für die Verträglichkeit des Brillenglases für den jeweiligen Brillenträger.

Die grundsätzliche Aufgabe bei der Konstruktion jedes progressiven Brillenglases besteht damit darin, - ohne unzumutbare Verschlechterung des Fernteils - die Seitenbereiche in der Übergangszone sowie gegebenenfalls die Seitenbereiche des Nahteils so zu gestalten, daß das Brillenglas möglichst gut verträglich für den Brillenträger ist.

Zur Lösung dieser grundsätzlichen Aufgabe ist in der Vergangenheit bei der Konstruktion einer zur Brechkraftänderung beitragenden Fläche eines progressiven Brillenglases von einer in einer Ebene liegenden oder gewunden verlaufenden Linie - auch als Hauptmeridian oder als Hauptlinie bezeichnet - als "Konstruktionsrückgrad der Fläche" ausgegangen worden. Diese Linie verläuft zentral auf der Fläche von oben nach unten und folgt mit ihrem Verlauf in etwa dem Durchstoßpunkt der Sehstrahlen durch die Brillenglasfläche bei einer Blickbewegung und insbesondere Blicksenkung. Die Hauptkrümmungen eines jeden Punktes dieser Linie sind derart gewählt worden, daß die gewünschte Zunahme des Flächenbrechwertes (auch als Addition bezeichnet) vom Fernteil zum Nahteil erreicht wird. Ausgehend von dieser Linie sind dann die Seitenbereiche der Fläche (mehr oder weniger) geeignet berechnet worden.

Für die Gestaltung der Seitenbereiche sind eine Vielzahl von Lösungen bekannt geworden. In der Anfangszeit der Berechnung progressiver Brillengläser ist eine rein flächentheoretische Optimierung ausschließlich der progressiven Fläche durchgeführt worden, bei der eine möglichst weitgehende Reduzierung des störenden Flächenastigmatismus bzw. ein "Abdrängen" des Flächenastigmatismus in die seitlichen unteren Bereiche des Brillenglases im Vordergrund gestanden hat.

Typisch für diese Vorgehensweise sind die aus der US-PS 2 878 721 oder der DE-AS 20 44 639 bekannten progressiven Flächen für Brillengläser, bei denen - sofern die progressive Fläche die Vorderfläche ist - die Krümmungen von Schnitten der progressiven Fläche mit ebenen Flächen, die horizontal verlaufen (Horizontalschnitte) oder auf dem Hauptmeridian senkrecht stehen (Orthogonalschnitte), Kegelschnitte oder Kurven höherer Ordnung sind, deren Krümmung im Fernteil zunimmt und im Nahteil abnimmt. In der Progressionszone erfolgt der Übergang zwischen der Zunahme der Krümmung der Schnitte im Fernteil und der Abnahme im Nahteil.

Diese Vorgehensweise führt dazu, daß in den Seitenbereichen der Brechkraftunterschied und damit auch die Verschneidungen abgebaut werden. Nachteilig ist jedoch, daß durch den Abbau des Brechkraftunterschiedes in den Seitenbereichen das orientierende Sehen im Randbereich erschwert und - je nach Design - sehr störende Schaukeleffekte beim Blicken in Seitenbereiche erzeugt werden. Weiterhin ändert sich die Flächenbrechkraft von Horizontalschnitten vergleichsweise stark.

Deshalb ist in der DE-PS 28 14 936 vorgeschlagen worden, die Krümmung im Fernteil bzw. im Nahteil nur in einem Streifen beidseits des Hauptmeridians abnehmen bzw. zunehmen zu lassen und außerhalb dieses Streifens die Änderung der Krümmung umzukehren.

Gemeinsam ist allen diesen Ansätzen jedoch die rein flächenbezogene Optimierung der progressiven Fläche.

Dieser rein flächenbezogene Ansatz findet sich auch in jüngeren Patentveröffentlichungen, wie der DE-C-42 38 067 oder der DE-C-43 42 234.

In der letztgenannten Druckschrift wird ein Ansatz beschrieben, bei dem bestimmte Bedingungen für die Gradienten des Flächenastigmatismus und des Flächenbrechwerts eingehalten werden sollen. Unabhängig davon, daß diese Gradienten beispielsweise dann, wenn die Fläche bereichsweise mit kubischen Splines beschrieben wird, überhaupt nicht definiert sind, läßt auch diese rein flächenbezogene Optimierung bestimmte physiologische Vorgaben außer Acht.

Ansätze für eine Optimierung der progressiven Fläche in der Gebrauchsstellung sind in der EP-A-677 177, der US-PS 4 606 622 oder der DE 196 12 284 beschrieben.

Zur Berechnung einer progressiven Fläche in der Gebrauchsstellung wird eine Gebrauchssituation festgelegt. Diese bezieht sich entweder auf einen konkreten Nutzer, für den die einzelnen Parameter in der jeweiligen Gebrauchssituation eigens ermittelt und die progressive Fläche gesondert berechnet und gefertigt wird, oder auf Durchschnittswerte, wie sie beispielsweise in der DIN 58 208 Teil 2 beschrieben sind.

Aber auch die bekannten, in der Gebrauchsstellung berechneten Brillengläser weisen noch eine Reihe von Nachteilen auf:

So sind bei den aus der US-PS 4 606 622 bekannten progressiven Flächen Spitzen im Verlauf der Linien gleichen Flächenastigmatismus für die Linien mit einem Flächenbrechwert von 5 dpt und 7 dpt vorhanden.

Der Grund hierfür dürfte möglicherweise darin liegen, daß bei der Berechnung Flächen- und Gebrauchsstellungsbezogene Ansätze vermischt worden sind.

Die DE-A-196 12 284 befaßt sich mit der Abnahme des mittleren Brechwerts in der Nähe zur Peripherie hin. Dies ist ein unzureichender Ansatz, da auch im Fernteil der Brechwert zur Peripherie hin nicht übermäßig zunehmen darf.

US-A-4 606 442 offenbart ein progressives Brillenglas, wobei die Wirkung des Brillenglases zwischen verschiedenen Bereichen des Brillenglases variiert. Insbesondere weist das Brillenglas eine Nahbereichszone und eine Fernbereichszone auf, wobei in der Progressionszone vom Fembereich hin zu dem Nahbereich, entlang der Hauptlinie die Astigmatismusabweichung beschränkt ist.

DE 37 16 201 offenbart ein progressives Brillenglas, bei dem Linien gleichen Flächenbrechwerts wenigstens im Bereich des Hauptmeridians weitgehend horizontal verlaufen, wobei die Fläche so gewählt wird, daß der Verlauf der Krümmungsänderung der Horizontalschnitte mit wachsendem Abstand vom Hauptmeridian durch Überlagerung zweier Funktionen gegeben ist.

Es ist eine Aufgabe der Erfindung, ein Verfahren zum Herstellen eines Brillenglas anzugeben, welches einen möglichst großen Fern- und einen möglichst großen Nahteil aufweist, wobei die Abnahme des mittleren Gebrauchswertes im Nahteil und die Zunahme des mittleren Gebrauchswertes im Fernteil zur Peripherie sehr gering ist und störende Abweichungen der Abbildungseigenschaften möglichst gering sind.

Diese Aufgabe wird durch das Verfahren gemäß Anspruch 1 gelöst. Eine bevorzugte Ausführungsvariante ist Gegenstand des abhängigen Anspruches.

Vorteilhafterweise ist eine Abweichung von einem vorgegebenen Astigmatismus, bevorzugt des verordneten Astigmatismus, sehr gering.

Erfindungsgemäß werden keine Flächenwerte, sondern ausschließlich Größen betrachtet, die sich auf die Gebrauchsstellung beziehen, nämlich die Abweichung vom vorgegebenen Astigmatismus (0 dpt beim astigmatimusfreien Auge bzw. der Verordnungs hinsichtlich Betrag und Achslage) und als Maß für die "Stärke" des Brillenglases der mittlere Gebrauchswert D.

Der mittlere Gebrauchswert D ist der Mittelwert der Kehrwerte der bildseitigen Schnittweiten S'1 und S'2 minus dem kehrwert der Objektentfernung, also dem kehrwert der objektseitigen Schnittweite S

$$D = 0,5 * (S'1 + S'2) - S$$

S' = Kehrwert der bildseitigen Schnittweite
S = Kehrwert der objektseitigen Schnittweite.

Erfindungsgemäß gilt für die astigmatischen Abweichungen:

- die astigmatische Abweichung entlang der Hauptlinic, d.h. die Differenz zwischen dem verordneten und dem tatsächlichen Astigmatismus, in Gebrauchsstellung betragt weniger als 0,2 dpt,
- die maximale astigmatische Abweichung beträgt weniger als das 1,2-fache der Addition Add, die als Differenz zwischen den mittleren Gebrauchswerten im Fernbezugspunkt ($D_{BF}$) und im Nahbezugspunkt ($D_{BN}$) definiert ist,
- die maximale astigmatische Abweichung tritt auf der nasalen Seite der Hauptlinie auf,
- der Wert der maximalen astigmatischen Abweichung auf der nasalen Seite ist um höchstens 0,15 dpt größer als der Wert der maximalen astigmatischen Abweichung auf der temporalen Seite.

Für die mittleren Gebrauchswerte gilt:

- im Bereich oberhalb des Zentrierpunktes $B_z$, also für $y > y(B_z)$ gilt für den mittleren Gebrauchswert $D_f$

$$D_\ell \leq 0,4 * \text{Add} + D_{BF}$$

- im Bereich, für den gilt $y < y(B_z) - 7$ mm, gilt für den Gebrauchswert $D_N$

$$D_N \geq 0,25 * \text{Add} + D_{BF}$$

- für den Abstand $xA(B_F)$ der Isolinien der astigmatischen Abweichung von 0,5 dpt auf der Höhe des Fernbezugspunktes, d.h. für $y = y(B_F)$ :

$$xA(B_F) \geq 0,06 / \text{Add}$$

- für den Abstand $xD(B_F)$ der Isolinien der Abweichung vom mittleren Gebrauchswert im Fernbezugspunkt von 0,25 dpt auf der Höhe des Fernbezugspunktes, d.h. für $y = y(B_F)$:

$$xD(B_F) \geq 0,04 / \text{Add}$$

- für den Abstand $xA(B_F)$ der Isolinien der astigmatischen Abweichung von 0,5 dpt auf der Höhe des Nahbezugspunktes, d.h. für $y = y(B_N)$ :

$$xA(B_N) \geq 0,015 / \text{Add}$$

- für den Abstand xA(B_F) der Isolinien der Abweichung vom mittleren Gebrauchswert im Nahbezugspunkt von 0,25 dpt auf der Höhe des Nahbezugspunktes, d.h. für y = y(B_F) :

$$xD(B_F) \geq 0,015 \ / \ Add$$

Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

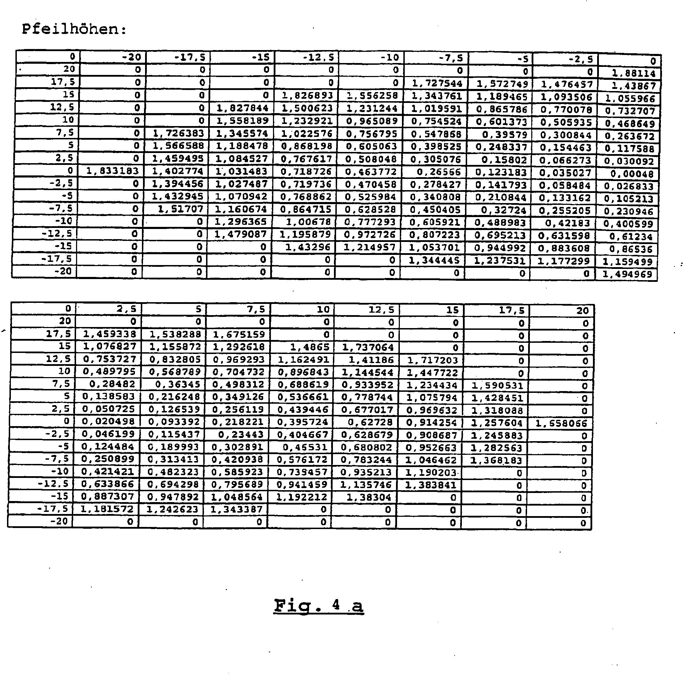

Fig. 4a     die Pfeilhöhe der progressiven Fläche eines konkreten Ausführungsbeispiels,

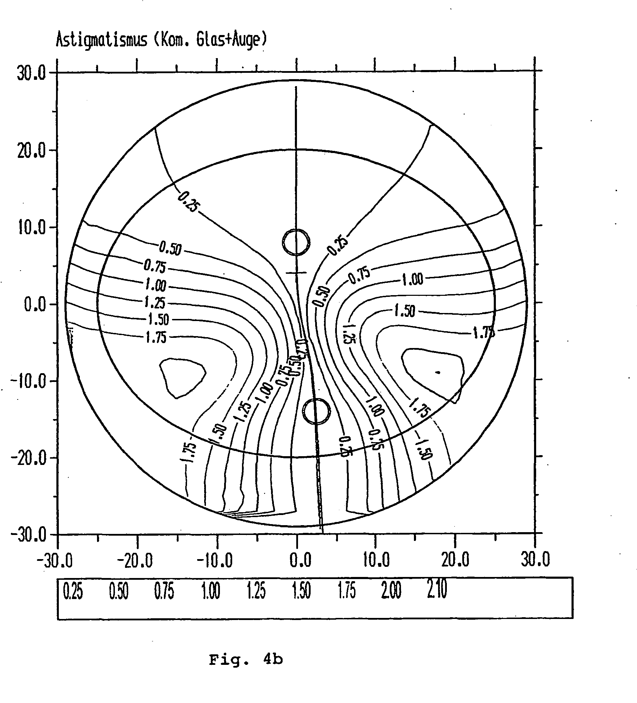

Fig. 4b     die Isolinien der astigmatischen Abweichung,

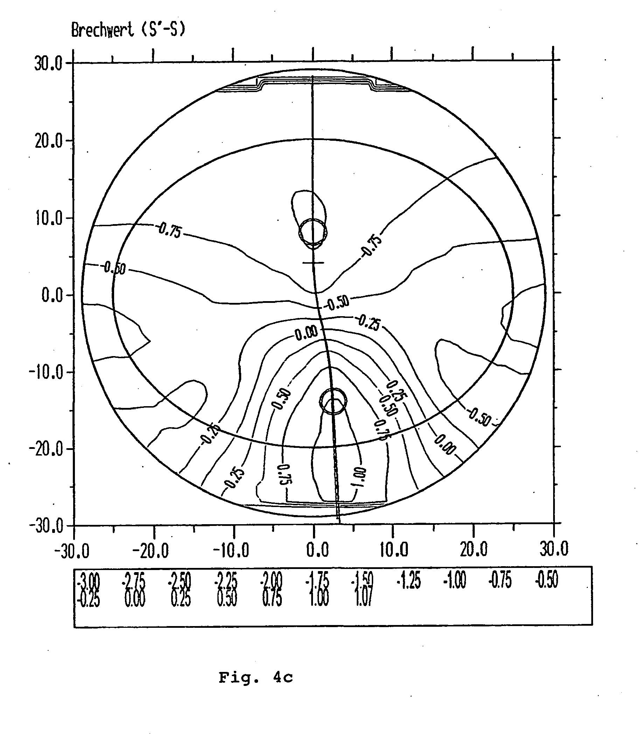

Fig. 4c     die Isolinien des mittleren Gebrauchswerts,

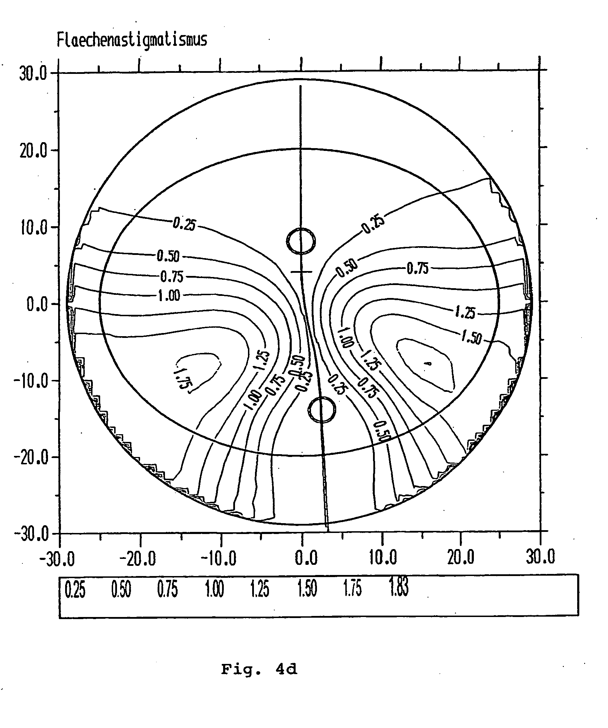

Fig. 4d     die Isolinien des Flächenastigmatismus,

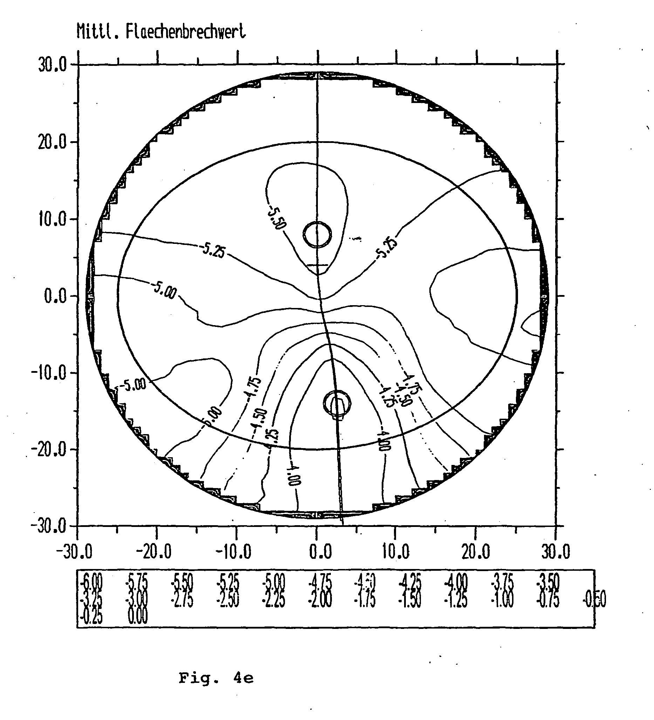

Fig. 4e     die Isolinien der mittleren Flächenbrechkraft für dieses Ausführungsbeispiel.

**Beschreibung von Ausführungsbeispielen**

Die Figuren 1 und 2 zeigen die astigmatische Abweichung und den mittleren Gebrauchswert eines Ausführungsbeispiels der Erfindung innerhalb eines Kreises mit dem Radius 20 mm um einen Punkt, der 4 mm unterhalb des sogenannten Zentrierkreuzes liegt. Der Fernbezugspunkt und der Nahbezugspunkt sind mit Kreisen bezeichnet, ihre Lage ist dem jeweiligen Figuren zu entnehmen.

Die sogenannte astigmatische Abweichung, d. h. der "Rest-Astigmatismus" des Systems Brillenglas/Auge kann mittels sogenannter Isolinien beginnend mit der Isolinie 0,25 dpt dargestellt werden. Die Isolinien geben die Abweichung des Astigmatismus bzgl. Betrag und Achslage von der zylindrischen Verordnung - im Falle eines astigmatismusfreien Auges 0 dpt - an.

Der mittlere Gebrauchswert D, d. h. der Mittelwert der Kehrwerte der bildseitigen Schnittweiten S'1 und S'2 minus der Objektentfernung, also der objektseitigen Schnittweite S

$$D = 0,5 \ * \ (S'1 \ + S'2) \ - \ S$$

kann ebenfalls in Form sogenannter Isolinien beginnend mit der Isolinie 0,75 dpt dargestellt werden.

Eine Abszisse (x-Achse) ist die horizontale Achse und eine Ordinate (y-Achse) ist die vertikale Achse in Gebrauchsstellung.

Sowohl der Fernteil als auch der Nahteil sind relativ groß Weiterhin nimmt im Fernteil der mittlere Gebrauchswert zur Peripherie hin kaum zu, im Nahteil nur wenig ab. Die maximale astigmatische Abweichung ist sehr gering, der Unterschied zwischen der maximalen Abweichung nasal und temporal unbedeutend.

Längs der Hauptlinie (die Abszisse gibt die y-Werte der Punkte auf der Hauptlinie an) existieren folgende Größen:

1. Zunahme des mittleren Gebrauchswertes in dpt:
durchgezogene Kurve a, Beschriftung auf der Ordinate von 0,0 bis 3,0
2. Achslage der astigmatische Abweichung in Grad:
durchgezogene Kurve b, Beschriftung auf der Ordinate von 0 bis 200
3. astigmatische Abweichung in dpt:
strichpunktierte Kurve, Beschriftung auf der Ordinate von 0,00 bis 0,16

Das in Fig. 4 beschriebene konkrete Ausführungsbeispiel weist im Fernbezugspunkt eine sphärische Wirkung (mittlerer Gebrauchswert) von -1 dpt und eine Addition A von 2 dpt auf. Eine astigmatische Verordnung ist nicht vorhanden. In allen Figuren ist die Abszisse (x-Achse) die horizontale Achse und die Ordinate (y-Achse) die vertikale Achse in Gebrauchsstellung.

Der Fern- und der Nahbezugspunkt sind in den Figuren 4 b-e jeweils mit Kreisen dargestellt, der Zentrierpunkt ist mit einem Kreuz bezeichnet - ihre Lage ist den Figuren zu entnehmen. Weiterhin ist der Verlauf der Hauptlinie eingezeichnet.

Die Teilfigur 4a gibt die Pfeilhöhe der progressiven augenseitigen Fläche für das Ausführungsbeispiel an. Unter Pfeilhöhe versteht man den Abstand eines Punktes mit den Koordinaten x und y (horizontale bzw. vertikale Achse in der Gebrauchsstellung des Brillenglases) von der Tangentialebene des Flächenscheitels. In der Tabelle sind jeweils in der linken Spalte die y-Werte (von - 20 bis +20 mm) und in der obersten Zeile ab der Spalte 2 folgende die x-Werte (von -20 bis + 20mm) aufgetragen. Die Pfeilhöhen sind ebenfalls in Millimeter angeben. Der Wert 0 bedeutet, daß für diese x,y-Koordinaten keine Pfeilhöhe angegeben wird.

Die Teilfigur 4b zeigt die astigmatische Abweichung innerhalb eines Kreises mit dem Radius 30 mm um einen Punkt, der 4 mm unterhalb des sogenannten Zentrierkreuzes liegt. Die astigmatische Abweichung ist. der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - im Falle eines astigmatismusfreien Auges 0 dpt - an.

Die Teilfigur 4c, welche nicht Gegenstand der vorliegenden Erfindung ist, zeigt entsprechend die Isolinien für den mittleren Gebrauchswert Der mittlere Gebrauchswert D ist der Mittelwert der Kehrwerte der bildseitigen Schnittweiten S'1 und S'2 minus dem Kehrwert der Objektentfernung, also dem Kehrwert der objektseitigen Schnittweite S

$$D = 0,5 * (S'1 + S'2) - S$$

und ist ebenfalls in Form sogenannter Isolinien beginnend mit der Isolinie-0,75 dpt dargestellt.

Entsprechend sind in den Teilfiguren 4d und 4e die Isolinien der Flächendaten, nämlich der Flächenastigmatismus und der mittlere Flächenbrechwert dargestellt. Zur Definition dieser Flächendaten wird auf die einleitenden Ausführungen verwiesen.

Das in Fig. 4 dargestellte Ausführungsbeispiel weist folgende individualisierte Gebrauchsbedingungen auf:

| | |
|---|---|
| D1x | 4,55 |
| D1y | 4,55 |
| N | 1,597 |
| D | 1,59 |
| DRP | 1,0 |
| PD | 63 |
| HSA | 15 |
| Vorneigung | 0 |

Hierbei bedeuten:

D1x　　Brechwert der Vorderfläche in x-Richtung(dpt)
D1y　　Brechwert der Vorderfläche in y-Richtung(dpt)
n　　　Brechungsindex des Glasmaterials
d　　　Mittendicke der Brillenlinse in mm
DRP　　Dickenreduktionsprisma in cm/m
PD　　Pupillenabstand in mm
HSA　　Hornhaut/Scheitel-Abstand in mm

Vorneigung des Brillenglases in Grad.

Selbstverständlich können die erfindungsgemäßen Merkmale auch auf die Berechnung und Herstellung von Brillengläsern mit zwei progressiven Flächen und/oder mit (zusätzlich) variierendem Brechungsindex übertragen werden.

**Patentansprüche**

1.　Verfahren zum Herstellen eines Brillenglases mit

- einem zum Blicken in größere Entfernungen und insbesondere "ins Unendliche" ausgelegten Bereichs, nachfolgend als "Fernteil" bezeichnet;
- einem zum Blicken in kürzere Entfernungen und insbesondere "Lese-Entfernungen" ausgelegten Bereichs, nachfolgend als "Nahteil" bezeichnet;
- einer zwischen Fernteil und Nahteil angeordneten Progressionszone, in der die Wirkung des Brillenglases von dem Wert in einem im Fernteil gelegenen Fernbezugspunkt auf den Wert eines im Nahteil gelegenen Nahbezugspunktes längs einer zur Nase hin gewundenen Kurve, nachfolgend als "Hauptlinie" bezeichnet, zunimmt;

mit den Schritten:

- Vorgeben von Gebrauchswerten, insbesondere eines Fernbezugspunktes und eines Nahbezugspunktes;
- Bestimmen des Brillenglases derart, daß

-- die astigmatische Abweichung entlang der Hauptlinie, d.h. die Differenz zwischen dem verordneten und dem tatsächlichen Astigmatismus in Gebrauchsstellung, weniger als 0,2 dpt beträgt,
-- die maximale astigmatische Abweichung weniger als das 1,2-fache der Addition Add beträgt, die als Differenz zwischen dem mittleren Gebrauchswerten im Fernbezugspunkt ($D_{BF}$) und im Nahbezugspunkt ($D_{BN}$) definiert ist,
-- die maximale astigmatische Abweichung auf der nasalen Seite der Hauptlinie auftritt und
-- der Wert der maximalen astigmatischen Abweichung auf der nasalen Seite um höchstens 0,15 dpt größer als der Wert der maximalen astigmatischen Abweichung auf der temporalen Seite ist.

**2.** Verfahren nach Anspruch 1 mit dem weiteren Schritt:

- Vorgeben eines Zentrierpunktes und
Herstellen des Brillenglases derart, daß
- im Bereich oberhalb des Zentrierpunktes $B_z$, also für $y > y(B_z)$ für den mittleren Gebrauchswert $D_f$

$$D_f \leq 0{,}4 * Add + D_{BF}$$

gilt,
- im Bereich, für den gilt $y < y(B_z) - 7mm$, für den Gebrauchswert $D_N$

$$D_N \geq 0{,}25 * Add + D_{BF}$$

gilt,
- für den Abstand $xA(B_F)$ der Isolinien der astigmatischen Abweichung von 0,5 dpt auf der Höhe des Fernbezugspunktes, d.h. für $y = y(B_F)$:

$$xA(B_F) \geq 0{,}06 / Add$$

gilt,
- für den Abstand $xD(B_F)$ der Isolinien der Abweichung vom mittleren Gebrauchswert im Fernbezugspunkt von 0,25 dpt auf der Höhe des Fernbezugspunktes, d.h. für $y = y(B_F)$:

$$xD(B_F) \geq 0{,}04 / Add$$

gilt
- für den Abstand $xA(B_F)$ der Isolinien der astigmatischen Abweichung von 0,5 dpt auf der Höhe des Nahbezugspunktes, d.h. für $y = y(B_N)$:

$$xA(B_N) \geq 0{,}015 / Add$$

gilt und

- für den Abstand $xA(B_F)$ der Isolinien der Abweichung vom mittleren Gebrauchswert im Nahbezugspunkt von 0,25 dpt auf der Höhe des Nahbezugspunktes, d.h. für $y = y(B_F)$:

$$xD(B_F) \geq 0{,}015 / Add$$

gilt.

## Claims

1. Method for producing a spectacle lens with

   - a region for viewing longer distances and, in particular, "to infinity", hereinafter referred to as the "long distance part";
   - a region for viewing shorter distances and, in particular, "reading distances" hereinafter referred to as the "short distance part";
   - a progression zone arranged between the long distance part and the short distance part in which the effect of the spectacle lens increases from the value in a long distance reference point arranged in the long distance part to the value of a short distance reference point arranged in the short distance part along a curve, hereinafter referred to as the "main line", which bends towards the nose;

   comprising the following steps:

   - setting use values, in particular a long distance reference point and a short distance reference point;
   - defining the spectacle lens in such a way that

     - the astigmatic deviation along the main line, i.e. the difference between the prescribed astigmatism and the actual astigmatism in the position of use is less than 0.2 dpt,
     - the maximum astigmatic deviation is less than 1.2 times the addition Add, which is defined as the difference between the average use value in the long distance reference point ($D_{BF}$) and in the short distance reference point ($D_{BN}$),
     - the maximum astigmatic deviation appears on the nasal side of the main line and
     - the value of the maximum astigmatic deviation on the nasal side is at most 0.15 dpt greater than the value of the maximum astigmatic deviation on the temporal side.

2. Method according to claim 1 comprising the following step:

   - setting a centring point and
   producing the spectacle lens in such a way that

   $$D_f \leq 0.4 * Add + D_{BF}$$

   applies in the region above the centring point $B_z$, that is to say it applies to $y > y(B_z)$ for the mean use value $D_f$

   $$D_N \geq 0.25 * Add + D_{BF}$$

   applies, in the region for which $y < y(B_z) - 7$ mm applies, to the use value $D_N$

$$xA(B_F) \geq 0.06/Add$$

applies to the distance $xA(B_F)$ of the isolines of the astigmatic deviation from 0.5 dpt to the height of the long distance reference point, i.e. it applies to $y = y(B_F)$

$$xD(B_F) \geq 0.04/Add$$

applies to the distance $xD(B_F)$ of the isolines of the deviation of the mean use value in the long distance reference point from 0.25 dpt to the height of the long distance reference point, i.e. it applies to $y = y(B_F)$

$$xA(Bn) \geq 0.015/Add$$

applies to the distance $xA(B_F)$ of the isolines of the astigmatic deviation from 0.5 dpt to the height of the short distance reference point, i.e. it applies to $y = y(B_N)$
and

$$xD(B_F) \geq 0.015/Add$$

applies to the distance $xA(B_F)$ of the isolines of the deviation of the mean use value in the short distance reference point from 0.25 dpt to the height of the short distance reference point, i.e. it applies to $y = y(B_F)$.

## Revendications

1. Procédé de fabrication d'un verre de lunettes, comprenant
   une zone conçue pour regarder à de grandes distances et en particulier « vers l'infini », désignée ci-après par « partie de vision de loin » ;
   une zone conçue pour regarder à de courtes distances et en particulier à des « distances de lecture », ci-après désignée par « partie de vision de près » ;
   une zone progressive disposée entre la partie de vision de loin et la partie de vision de près, dans laquelle l'effet du verre de lunettes augmente depuis la valeur à un point de référence de vision de loin situé dans la partie de vision de loin jusqu'à la valeur d'un point de référence de vision de près situé dans la partie de vision de près le long d'une courbe sinueuse vers le nez, ci-après désignée par « ligne principale » ;
   comprenant les étapes consistant à :

   prédéfinir des valeurs d'utilisation, en particulier un point de référence de vision de loin et un point de référence de vision de près ;
   déterminer le verre de lunettes de telle sorte que

   - l'aberration astigmatique le long de ligne principale, c'est-à-dire la différence entre l'astigmatisme prescrit et l'astigmatisme réel dans la position d'utilisation est de moins de 0,2 dpt ;
   - l'aberration astigmatique maximale est de moins de 1,2 fois l'addition Add qui est définie comme la différence entre les valeurs d'utilisation moyennes au point de référence de vision de loin ($D_{BF}$) et au point de référence de vision de près ($D_{BN}$) ;
   - l'aberration astigmatique maximale apparaît du côté du nez de la ligne principale ; et
   - la valeur de l'aberration astigmatique maximale du côté du nez est au maximum de 0,15 dpt supérieure à la valeur de l'aberration astigmatique maximale du côté des tempes.

2. Procédé selon la revendication 1, comprenant l'étape supplémentaire consistant à :

prédéfinir un point de centrage et fabriquer le verre de lunettes de telle sorte que

- dans la zone au-dessus du point de centrage $B_z$, donc pour $y > y(B_z)$,

$$D_f \leq 0,4 * Add + D_{BF}$$

s'applique pour la valeur d'utilisation moyenne $D_f$ ;
- dans la zone pour laquelle $y < y(B_z) - 7$ mm s'applique,

$$D_N \geq 0,25 * Add + D_{BF}$$

s'applique pour la valeur d'utilisation $D_N$;
- pour la distance $xA(B_F)$ des lignes isométriques de l'aberration astigmatique de 0,5 dpt à la hauteur du point de référence de vision de loin, c'est-à-dire pour $y = y(B_F)$ :

$$xA(B_F) \geq 0,06 / Add$$

s'applique ;
- pour la distance $xD(B_F)$ des lignes isométriques de l'aberration par rapport à la valeur d'utilisation moyenne au point de référence de vision de loin de 0,25 dpt à la hauteur du point de référence de vision de loin, c'est-à-dire pour $y = y(B_F)$ :

$$xD(B_F) \geq 0,04 / Add$$

s'applique ;
- pour la distance $xA(B_F)$ des lignes isométriques de l'aberration astigmatique de 0,5 dpt à la hauteur du point de référence de vision de près, c'est-à-dire pour $y = y(B_N)$ :

$$xA(B_N) \geq 0,015 / Add$$

s'applique ; et
- pour la distance $xA(B_F)$ des lignes isométriques de l'aberration par rapport à la valeur d'utilisation moyenne de 0,25 dpt à la hauteur du point de référence de vision de près, c'est-à-dire pour $y = y(B_F)$ :

$$xD(B_F) \geq 0,015 / Add$$

s'applique.

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,476457 | 1,43867 |
| 15 | 0 | 0 | 0 | 1,826893 | 1,556258 | 1,343761 | 1,189465 | 1,093506 | 1,055966 |
| 12,5 | 0 | 0 | 1,827844 | 1,500623 | 1,231244 | 1,019591 | 0,865786 | 0,770078 | 0,732707 |
| 10 | 0 | 0 | 1,558189 | 1,232921 | 0,965089 | 0,754524 | 0,601373 | 0,505935 | 0,468649 |
| 7,5 | 0 | 1,726383 | 1,345574 | 1,022576 | 0,756795 | 0,547868 | 0,39579 | 0,300844 | 0,263672 |
| 5 | 0 | 1,566588 | 1,188478 | 0,868198 | 0,605063 | 0,398525 | 0,248337 | 0,154463 | 0,117588 |
| 2,5 | 0 | 1,459495 | 1,084527 | 0,767617 | 0,508048 | 0,305076 | 0,15802 | 0,066273 | 0,030092 |
| 0 | 1,833183 | 1,402774 | 1,031483 | 0,718726 | 0,463772 | 0,26566 | 0,123183 | 0,035027 | 0,00048 |
| -2,5 | 0 | 1,394456 | 1,027487 | 0,719736 | 0,470458 | 0,278427 | 0,141793 | 0,058484 | 0,026833 |
| -5 | 0 | 1,432945 | 1,070942 | 0,768862 | 0,525984 | 0,340808 | 0,210844 | 0,133162 | 0,105213 |
| -7,5 | 0 | 1,51707 | 1,160674 | 0,864715 | 0,628528 | 0,450405 | 0,32724 | 0,255205 | 0,230946 |
| -10 | 0 | 0 | 1,296365 | 1,00678 | 0,777293 | 0,605921 | 0,488983 | 0,42183 | 0,400599 |
| -12,5 | 0 | 0 | 1,479087 | 1,195879 | 0,972726 | 0,807223 | 0,695213 | 0,631598 | 0,61234 |
| -15 | 0 | 0 | 0 | 1,43296 | 1,214957 | 1,053701 | 0,944992 | 0,883608 | 0,86536 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494969 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,076827 | 1,155872 | 1,292618 | 1,4865 | 1,737064 | 0 | 0 | 0 |
| 12,5 | 0,753727 | 0,832805 | 0,969293 | 1,162491 | 1,41186 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,688619 | 0,933952 | 1,234434 | 1,590531 | 0 |
| 5 | 0,138583 | 0,216248 | 0,349126 | 0,536661 | 0,778744 | 1,075794 | 1,428451 | 0 |
| 2,5 | 0,050725 | 0,126539 | 0,256119 | 0,439446 | 0,677017 | 0,969632 | 1,318088 | 0 |
| 0 | 0,020498 | 0,093392 | 0,218221 | 0,395724 | 0,62728 | 0,914254 | 1,257604 | 1,658066 |
| -2,5 | 0,046199 | 0,115437 | 0,23443 | 0,404667 | 0,628679 | 0,908687 | 1,245883 | 0 |
| -5 | 0,124484 | 0,189993 | 0,302891 | 0,45531 | 0,680802 | 0,952663 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,633866 | 0,694298 | 0,795689 | 0,941459 | 1,135746 | 1,383841 | 0 | 0 |
| -15 | 0,887307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

**Fig. 4 a**

Fig. 4b

Brechwert (S'-S)

Fig. 4c

Fig. 4d

Fig. 4e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2878721 A
- DE 2044639 B
- DE 2814936 C
- DE 4238067 C
- DE 4342234 C
- EP 677177 A
- US 4606622 A
- DE 19612284
- DE 19612284 A
- US 4606442 A
- DE 3716201